(19)

Europäisches
Patentamt
European
Patent Office
Office européen
des brevets

(11)  **EP 4 397 928 A1**

(12) # EUROPEAN PATENT APPLICATION
published in accordance with Art. 153(4) EPC

(43) Date of publication:
**10.07.2024 Bulletin 2024/28**

(21) Application number: **22864715.2**

(22) Date of filing: **02.09.2022**

(51) International Patent Classification (IPC):
*F25J 3/04* (2006.01)      *F25J 3/02* (2006.01)
*C01B 23/00* (2006.01)      *B01D 3/16* (2006.01)

(52) Cooperative Patent Classification (CPC):
**F25J 3/04678; B01D 3/16; C01B 23/00;
F25J 3/04703; F25J 3/04721; F25J 3/04727;
F25J 3/04878; F25J 3/04909; F25J 3/04927;**
F25J 2235/50

(86) International application number:
**PCT/JP2022/033062**

(87) International publication number:
**WO 2023/033133 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.09.2021   JP 2021143359
16.03.2022   JP 2022041534**

(71) Applicant: **Taiyo Nippon Sanso Corporation
Tokyo 142-8558 (JP)**

(72) Inventors:
• **ISHIZAKI, Kazutoshi
Tokyo 142-8558 (JP)**
• **EGOSHI, Nobuaki
Tokyo 142-8558 (JP)**

(74) Representative: **HGF
HGF Limited
1 City Walk
Leeds LS11 9DX (GB)**

(54) **ARGON TOWER FOR AIR SEPARATION DEVICE, AND AIR SEPARATION DEVICE**

(57)    An object of the present invention is to provide an argon column for an air separation unit in which the height of the distillation column is reduced without reducing distillation performance. The present invention provides an argon column for an air separation unit including an upper section and a lower section; the upper section and the lower section both have a bed having the same bed length within the same section; the upper section length is 72% or less of the total bed length; and the upper bed length is 1.25 times or more than the lower bed length.

EP 4 397 928 A1

# FIG. 1

(A)  (B)  (C)

**Description**

TECHNICAL FIELD

The present invention relates to an argon column for an air separation unit and an air separation unit.

BACKGROUND ART

A typical air separation unit is equipped with a high-pressure distillation column, a low-pressure distillation column, and an argon column as a distillation column.

When obtaining argon on a commercial scale, using an air separation unit equipped with an argon column that is a structured packed column filled with structured packing materials, compressed air is used as a raw material, and a feed (argon purity: about 10%, oxygen content: about 90%, nitrogen content: about 100 ppm) which is supplied from a middle portion of the low-pressure column is rectified in the argon column. Thereby, high-purity argon product can be obtained. Generally, the argon concentration at the top of the argon column is 98% to 99.999% or more (oxygen purity: about 1 ppm).

In general, the packing is divided into sections of a certain length in the vertical direction in order to prevent liquid maldistribution of the descending liquid in the distillation column and maintain distillation performance. The filling material in each section is called a bed, and its length is called a bed length.

Additionally, within the distillation column, a liquid distributor and a collector (hereinafter referred to as "internal") are installed between the divided beds to remix and redistribute the descending liquid.

For example, Patent Document 1 discloses an argon column with seven beds, all of which have the same bed length.

Additionally, Patent Document 2 discloses an argon column in which among beds stacked in the vertical direction, the bed length of the lowest bed is short and the bed lengths of the other beds are equal in order to prevent performance deterioration.

PRIOR ART DOCUMENTS

PATENT DOCUMENTS

Patent Document 1 Japanese Patent No. 6257656
Patent Document 2 Japanese Unexamined Patent Application, First Publication No. 2000-337766

SUMMARY OF INVENTION

PROBLEM TO BE SOLVED BY THE INVENTION

However, Patent Documents 1 and 2 do not disclose any technology related to reducing the height of the argon column.

Therefore, an object of the present invention is to provide an argon column for an air separation unit in which the height of the distillation column is reduced without reducing distillation performance. Another object of the present invention is to provide an air separation unit that can be downsized without reducing distillation performance.

MEANS FOR SOLVING THE PROBLEM

The present invention provides the following argon column for an air separation unit and an air separation unit.

[1] An argon column for an air separation unit including a high-pressure column, a low-pressure column, and an argon column, that is a structured packed column using structured packing materials, and that produces an argon product using a fluid supplied from a middle portion of the low-pressure column as a raw material;

wherein the argon column includes an upper section and a lower section;
wherein the upper section and the lower section both have a bed having the same bed length within the same section;
wherein the upper section length is 72% or less of the total bed length; and

wherein the upper bed length is 1.25 times or more than the lower bed length.

[2] The argon column for an air separation unit according to [1],

wherein the number of the beds in the upper section is one or more; and
wherein the number of the beds in the lower section is two or more.

[3] The argon column for an air separation unit according to [1] or [2],
wherein an oxygen concentration in the argon product is 10 ppm or less.
[4] The argon column for an air separation unit according to any one of [1] to [3],
wherein the argon column is vertically divided into two or more parts.
[5] An air separation unit including the argon column for an air separation unit according to any one of [1] to [4].

EFFECTS OF THE INVENTION

The argon column for an air separation unit of the present invention can reduce the height of the distillation column without reducing distillation performance.
Furthermore, the air separation unit of the present invention can be downsized without reducing distillation performance.

BRIEF DESCRIPTION OF DRAWINGS

FIG. 1 is a cross-sectional view showing an argon column for an air separation unit as one embodiment of the present invention.
FIG. 2 is a cross-sectional view showing an argon column for an air separation unit as one embodiment of the present invention.
FIG. 3 is a cross-sectional view showing an argon column for an air separation unit as a comparative example of the present invention.
FIG. 4 is a schematic diagram showing an air separation unit as one embodiment according to the present invention.
FIG. 5 is a schematic diagram showing an air separation unit as another embodiment according to the present invention.
FIG. 6 is a diagram showing simulation results of an experimental example.
FIG. 7 is a diagram showing simulation results of an experimental example.

DETAILED DESCRIPTION OF THE PREFERRED EMBODIMENTS

Although the dimensions and the like in the figures illustrated in the following description are merely examples, the present invention is not necessarily limited thereto, and can be implemented with appropriate changes within the scope of the gist thereof.

<Argon column for an air separation unit>

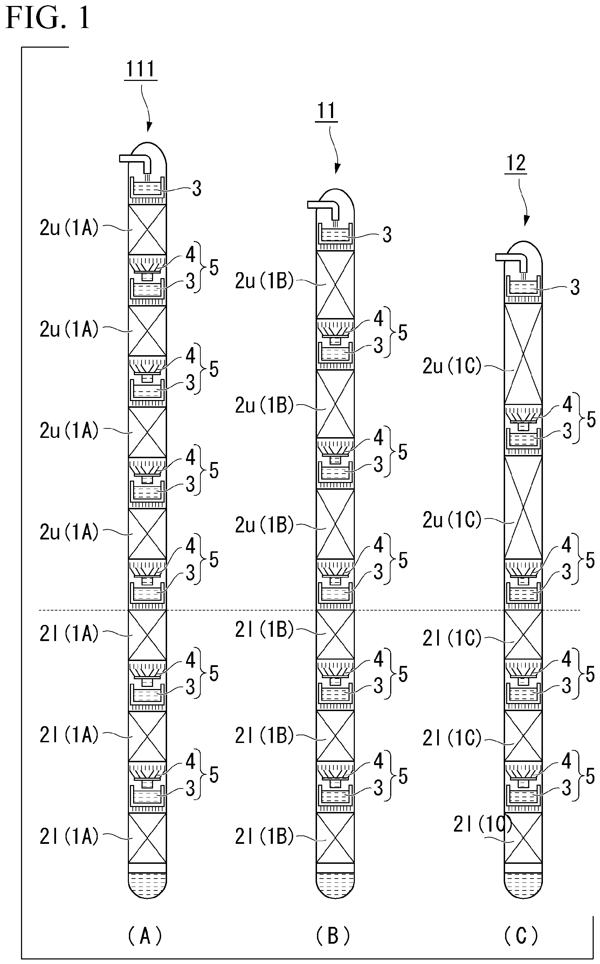

First, the configuration of an argon column for an air separation unit as one embodiment according to the present invention will be described with reference to the drawings. FIG. 1 (B) is a cross-sectional view of an argon column 11 for an air separation unit, which is a first embodiment of the present invention.
As shown in FIG. 1 (B), the argon column 11 for an air separation unit (hereinafter also simply referred to as "argon column") of the present embodiment is used in an air separation unit that includes a high-pressure column, a low-pressure column, and an argon column. Specifically, the argon column 11 of the present embodiment is a structured packed column that uses a structured packing material (bed), and obtains an argon product using a feed which is supplied from a middle portion of the low-pressure column as a raw material by countercurrent contact of gas and liquid within the column.
Inside the argon column 11, there are provided three beds 2u located on the upper side, three beds 2l located on the lower side, and an internal 5 located between the beds. That is, the argon column 11 of the present embodiment has six beds in total. Further, inside the argon column 11, the beds and the internals 5 are alternately stacked in the axial direction (vertical direction).
The beds 2u and 2l are media for contacting liquid and gas for mass transfer operations. The beds 2u and 2l are not particularly limited as long as they are a medium that promotes gas-liquid contact. As the beds 2u and 2l, known beds can be used. For example, the structured packing material disclosed in Japanese Unexamined Patent Application, First Publication No. 2016-59888, which is made by laminating a plurality of sheet materials made of thin metal plates, can be used.

The internal 5 includes a liquid distributor 3 and a collector 4. Further, in the internal 5, the collector 4 is located above the liquid distributor 3.

The liquid distributor 3 has a function of remixing the liquid to make the liquid composition uniform and then distributing the liquid. As a result, the liquid that has descended from the bottom of the bed located above the liquid distributor 3 (hereinafter also simply referred to as "descending liquid") can be uniformly distributed again to the bed located below the liquid distributor 3. The structure of the liquid distributor 3 is not particularly limited as long as it is capable of collecting and remixing liquids. For example, a structure having a plurality of dispersion holes disclosed in Japanese Unexamined Patent Application, First Publication No. 2011-206681 can be adopted.

The collector 4 has a function of collecting the liquid descending from the bottom of each bed in the argon column 11 above the liquid distributor 3, and passing the gas ascending toward the bottom of each bed (hereinafter also simply referred to as "ascending gas"). The structure of the collector 4 is not particularly limited as long as it performs the above-mentioned functions.

Next, the operation of the argon column 11 of the present embodiment will be described below.

First, in the argon column 11 shown in FIG. 1(B), a gas mainly containing oxygen and argon is supplied to the bottom of the argon column 11, and the gas becomes an ascending gas that ascends inside the argon column 11.

The ascending gas is liquefied by a condenser (not shown) provided at the top of the argon column 11, flows down as a reflux liquid to the bed 2u located at the top, and is continuously brought into gas-liquid contact with the ascending gas to perform distillation. The liquid flowing down from the bottom of the bed is collected by the collector 4, then uniformly distributed by the liquid distributor 3, flows down each bed 2u and 2l, is collected by the collector 4, is uniformly distributed again by the liquid distributor 3, and then flows down to the beds 2l and 2u located below.

In the argon column 11 of the present embodiment, argon is concentrated at the top of the argon column 11 at a concentration that satisfies the product specifications, and an oxygen-enriched liquid containing argon is sent back from the bottom of the column to the low-pressure column as a side-feed.

In the argon column 11 of the present embodiment, the oxygen concentration in the argon product is preferably 10 ppm or less.

FIG. 1(A) is a cross-sectional view showing the configuration of an argon column of the prior art (Patent Document 1 mentioned above).

As shown in FIG. 1(A), a conventional argon column 111 includes four beds 2u located on the upper side, three beds 2l located on the lower side, and an internal 5 located between the beds. That is, the conventional argon column 111 includes seven beds in total. Further, inside the argon column 111, the beds and the internals 5 are alternately stacked in the axial direction (vertical direction).

Furthermore, in the conventional argon column 111, the lengths (the bed lengths in the axial direction of the argon column) of the bed 2u (1A) and the bed 2l (1A) are all equal.

With this configuration, the conventional argon column 111 maintains distillation performance while reducing the height of the distillation column.

On the other hand, as shown in FIG. 1 (B), three beds 2u located on the upper side and three beds 2l located on the lower side are provided in the argon column 11 of the present embodiment. That is, argon column 11 of the present embodiment includes six beds in total.

In addition, in the argon column 11 of the present embodiment, the bed lengths of the beds 2u are the same, and the bed lengths of the beds 2l are also the same.

Furthermore, in the argon column 11 of the present embodiment, the bed length of the bed 2u is longer than the bed length of the bed 2l.

Furthermore, in the argon column 11 of the present embodiment, the total number of the internals 5 is five, which is one fewer than the conventional argon column 111.

With this configuration, compared to the conventional argon column 111, the argon column 11 of the present embodiment can further reduce the height of the distillation column due to the installation space of the internal 5, which is reduced by one, without reducing the distillation performance.

Here, a dotted line shown in FIG. 1(A) and FIG. 1(B) indicates the position of the upper part of the third bed from the bottom in the conventional argon column 111. The upper part from the dotted line is defined as the upper section, and the lower part is defined as the lower section. That is, in the present invention, with the upper end of the third bed from the bottom of the conventional argon column 111 as a reference, the upper section is defined as the upper section, and the lower section is defined as the lower section.

Further, the bed located in the upper section is defined as an upper bed 2u, and the bed located in the lower section is defined as a lower bed 2l.

Furthermore, the total of the bed lengths in the argon column is defined as "total bed length", the total of the bed lengths of the upper beds 2U located in the upper section is defined as "upper section length", and the total of the bed lengths of the lower beds 2L located in the lower section is defined as "lower section length".

That is, the argon column 11 of the present embodiment includes the upper section and the lower section, the upper section and the lower section both have the same bed length within the same section, the number of the beds in the upper section is three, and the number of the beds in the lower section is three.

Note that the position (height) of the lower section of the argon column 11 of the present embodiment is the same as the position (height) of the lower section of the conventional argon column 111.

Further, the number of the beds in the lower section of the present embodiment argon column 11 and the number of the beds in the lower section of the conventional argon column 111 are both three. That is, the argon column 11 of the present embodiment and the conventional argon column 111 have the same bed length of the lower bed 2l and the same lower section length. On the other hand, the argon column 11 of the present embodiment and the conventional argon column 111 are different in the bed length of the upper bed 2u and the upper section length (argon column 11 is longer in both cases).

Further, in the argon column 11 of the present embodiment, the upper section length is 72% or less of the total bed length, and the upper bed length is 1.25 times or more than the lower bed length.

As explained in the examples below, when the upper section length of the argon column 11 is 72% or less of the total bed length, and the upper bed length is 1.25 times or more than the lower bed length, the total number of the beds can be reduced without reducing distillation performance, and because the total number of the beds can be reduced, the total number of the internals can also be reduced. By suppressing the increase in the upper section length, the height of the distillation column can be reduced.

(Modification 1)

Next, a modification of the argon column 11 of the present embodiment described above will be described.

FIG. 1 (C) is a cross-sectional view showing the argon column 12, which is a modification of the present embodiment. Here, a dotted line shown in FIG. 1(C) indicates the position of the upper part of the third bed from the bottom in the conventional argon column 111 shown in FIG. 1(A).

As shown in FIG. 1(C), in the argon column 12, which is a modified embodiment of the present embodiment, two beds 2u (1C) are located in the upper part, and three beds 2l (1C) are located in the lower part of the argon column 12. That is, the total number of the beds in the argon column 12 is five.

In the argon column 12, the beds 2u (1C) have the same bed length, and the beds 2l (1C) have the same bed length.

Furthermore, in the argon column 12, the bed length of the bed 2u (1C) is longer than the bed length of the bed 2l (1C).

Further, the total number of the internals 5 of the argon column 12 is four, which is one fewer than the argon column 11 described above.

With such a configuration, compared to the argon column 11 described above, the height of the distillation column can be further suppressed in the argon column 12, which is a modified embodiment of the present embodiment, without reducing the distillation performance.

That is, the argon column 12 includes the upper section and the lower section, the upper section and the lower section both have the same bed length within the same section, the number of the beds in the upper section is two, and the number of the beds in the lower section is three.

Note that the position (height) of the lower section of the modified argon column 12 is the same as the position (height) of the lower section of the conventional argon column 111 and the argon column 11 of the embodiment described above. Further, the number of the beds in the lower sections of the modified argon column 12, the argon column 11 of the present embodiment described above, and the conventional argon column 111 are all three. That is, the argon column 12 of the modified embodiment, the argon column 11 of the present embodiment described above, and the conventional argon column 111 have the same bed length of the lower bed 2l and the same lower section length. On the other hand, the argon column 12 of the modified embodiment, the argon column 11 of the present embodiment described above, and the conventional argon column 111 all differ in the bed length of the upper beds 2u and the upper section length.

Further, in the argon column 12, the upper section length is 72% or less of the total bed length.

Further, in the argon column 12, the upper bed length is 1.25 times or more than the lower bed length.

(Modifications 2 to 4)

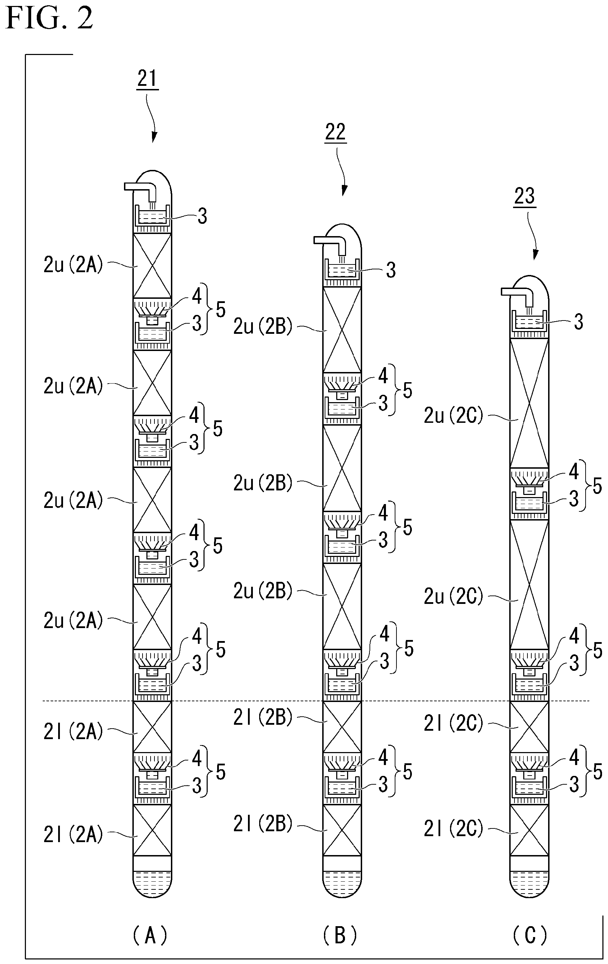

FIGS. 2 (A) to 2(C) are cross-sectional views showing the argon column as a modification of the present embodiment. Here, a dotted line shown in FIGS. 2(A) to 2(C) indicates the position of the upper part of the second bed from the bottom in the conventional argon column 111 shown in FIG. 1(A).

As shown in FIGS. 2(A) to 2(C), in the argon columns 21, 22, and 23, which are modified embodiments of the present embodiment, 2 to 4 beds 2u (2A) to 2u (2C) are located in the upper part of the column, and 2 beds 21 are located in the lower part. That is, the total number of the beds in the argon columns 21, 22, and 23 is four to six.

In each of the argon columns 21, 22, and 23, the beds 2u (2A) to 2u (2C) have the same bed length, and the beds 21 (2A) to 21 (2C) have the same bed length.

Furthermore, in the argon columns 21, 22, and 23, the bed lengths of the beds 2u (2A) to 2u (2C) are longer than the bed lengths of the beds 2l (2A) to 21 (2C).

Furthermore, the total number of the internals 5 of the argon columns 21, 22, and 23 is five, four, and three, respectively, which is smaller than the total number (six) of the internals 5 of the conventional argon column 111 described above.

With such a configuration, in the argon columns 21, 22, and 23, which are modified embodiments of the present embodiment, the column height can be further suppressed without reducing distillation performance, compared to the conventional argon column 111.

That is, each of the argon columns 21, 22, and 23 includes the upper section and the lower section, the upper section and the lower section both have the same bed length within the same section, and the number of the beds in the upper section is two to four, and the number of the beds in the lower section is two.

Note that the positions (heights) of the lower sections of the modified argon columns 21, 22, and 23 are the same as the positions (heights) of the lower sections of the conventional argon column 111. Further, the number of the beds in the lower sections of the modified argon columns 21, 22, 23 and the conventional argon column 111 is two. That is, the modified argon columns 21, 22, 23 and the conventional argon column 111 have the same bed length of the lower beds 2l, and the lower section length. On the other hand, the modified argon columns 21, 22, 23 and the conventional argon column 111 are different in the bed length of the upper bed 2u, and the upper section length.

Moreover, the upper section length of the argon columns 21, 22, and 23 is 72% or less of the total bed length.

Furthermore, the upper bed length of the argon columns 21, 22, and 23 is 1.25 times or more the lower bed length.

As explained above, the argon column 11 according to the present embodiment includes the upper section and the lower section, the upper section and the lower section both have the same bed length within the same section, the number of the beds in the upper section is three, the number of the beds in the lower section is three, the upper section length is 72% or less of the total bed length, and the upper bed length is 1.25 times or more than the lower bed length. With this configuration, while suppressing an increase in the length of the upper section, the total number of the internals 5 can be reduced by one, compared to the total number of the internals 5 (six) of the conventional argon column 111. Therefore, when compared with the conventional argon column 111 (the total number of the beds is seven and all bed lengths are the same), the argon column 11 of the present embodiment can further suppress the height of the distillation column without reducing distillation performance.

Similarly, according to the argon columns 12, 21 to 23, which are modified embodiments of the present embodiment, similar to the above-mentioned argon column 11, compared to the argon column 111 of the prior art, the height of the distillation column can be further reduced without reducing distillation performance.

<Air separation unit>

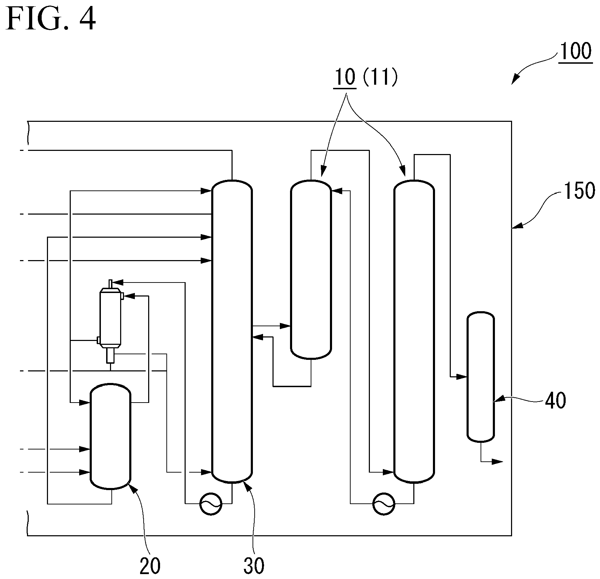

FIG. 4 is a schematic diagram showing an air separation unit 100 as one embodiment according to the present invention.

As shown in FIG. 4, the air separation unit 100 of the present embodiment includes an argon column 10 which is divided into two parts at an arbitrary position, a high-pressure distillation column (high-pressure column) 20, a low-pressure distillation column (low-pressure column) 30, and a high-purity argon distillation column 40 inside a cold box (cold box) 150.

According to the air separation unit 100 of the present embodiment, by using the argon column 11 of the embodiment described above as the argon column 10, it is possible to suppress the height of the distillation column, and the height of the cold box 150 can be reduced without deteriorating the distillation performance. Thereby, compactness of the device (that is, miniaturization of the entire device) is possible.

Note that the technical scope of the present invention is not limited to the above-described embodiments, and various changes can be made without departing from the spirit of the present invention. For example, in the air separation unit 100 of the embodiment described above, depending on the shape of the cold box 150, the argon column 11 may be used without being divided, or the argon column 11 may be used after being divided into two or more. The dividing position at this time is not limited to the boundary between the upper section and the lower section.

Further, in the argon columns 11, 12 and the argon columns 22, 23 of the above-described embodiments, the case where the number of the upper beds 2u constituting the upper section is two to three has been described as an example, but the present invention is not limited to this embodiment. That is, when the number of the lower beds 2l constituting the lower section is two or three, the number of upper beds 2u forming the upper section may be one.

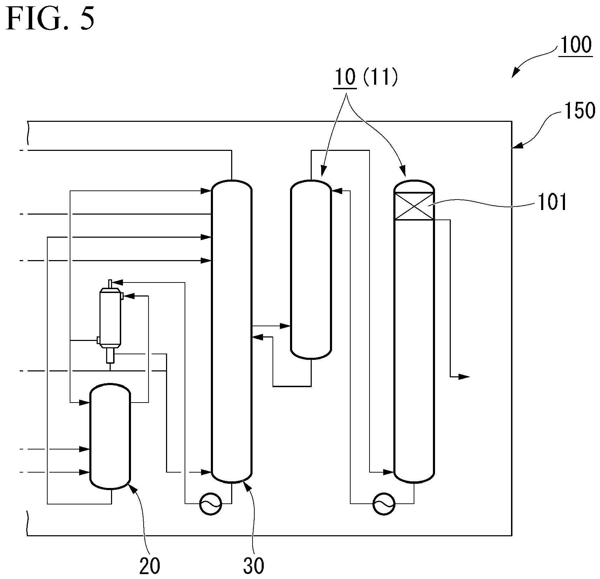

In addition, the argon column is not limited to collecting the product from the top of the argon column. In the case of an argon column equipped with a section for separating at the upper part 101 of the upper section as shown in Fig. 5, the product may be collected from the middle portion of the argon column. In this case, one argon column does not have to have both the upper section and a section 101 that performs the separation in this upper section. The argon column including the upper section and the argon column including the section that performs the separation in the upper part 101 may be separate.

Furthermore, in the embodiment shown in Figure 4, the argon product from the upper section of the argon column 11 is further introduced into the high-purity argon column, but depending on the nitrogen composition in the lower section of the argon column, it is not necessary to install a high-purity argon column. If the nitrogen composition is 500 ppm or less, preferably 50 ppm or less, more preferably 1 ppm or less, there is no need to install the high-purity argon column.

EXAMPLES

The present invention will be specifically explained below using verification tests, but the present invention is not limited by the following description.

(Comparative Examples 1 to 3)

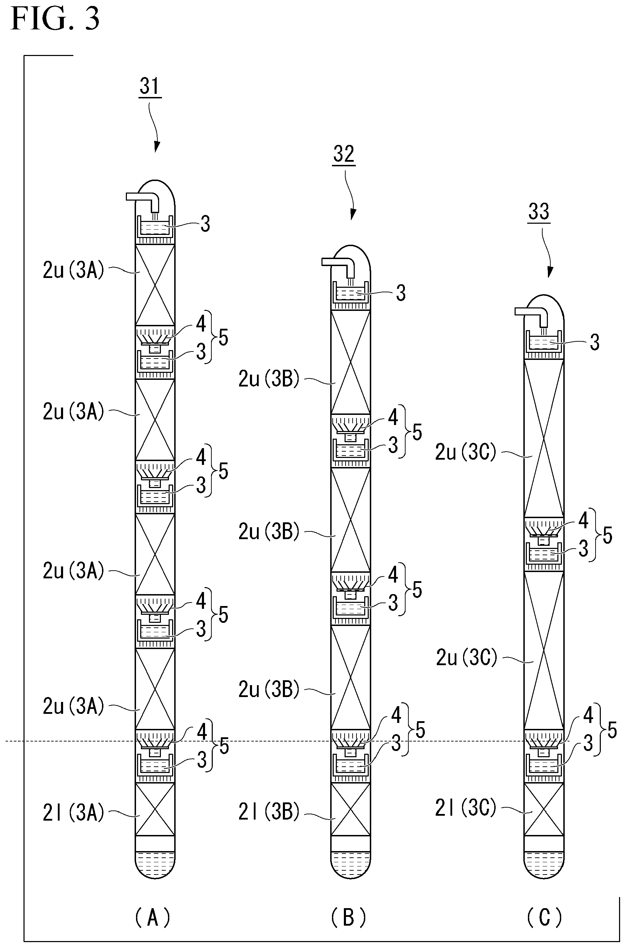

FIG. 3 (A) to 3(C) are cross-sectional views showing an argon column as a comparative example of the present invention. Here, a dotted line shown in FIGS. 3(A) to 3(C) indicates the position of the upper part of the first bed from the bottom in the conventional argon column 111 shown in FIG. 1(A).

As shown in FIGS. 3(A) to 3(C), in the argon columns 31, 32, and 33 of the comparative examples, two to four beds 2u are located in the upper part of the column, and one bed 21 is located in the lower part. That is, the total number of the beds in the argon columns 31, 32, and 33 is three to five.

In each of the argon columns 31, 32, and 33, the beds 2u (3A) to 2u (3C) have the same bed length, and the bed lengths of the beds 2l (3A) to 21 (3C) are all the same as the bed length of the bed 2l (1A) in the conventional argon column 111.

Furthermore, in the argon columns 31, 32, and 33, the bed lengths of the beds 2u (3A) to 2u (3C) are longer than the bed lengths of the beds 2l (3A) to 21 (3C).

Furthermore, the total number of the internals 5 of the argon columns 31, 32, and 33 is four, three, and two, respectively, which is smaller than the total number (six) of the internals 5 of the conventional argon column 111 described above.

That is, each of the argon columns 31, 32, and 33 of the comparative examples includes the upper section and the lower section, and the upper section and the lower section have the same bed length within the same section, and the number of the beds in the upper section is two to four, and the number of the beds in the lower section is one.

(Verification test 1)

In FIGS. 1 to 3, when the number of the upper beds is reduced from four to two ((A) to (C) in each figure), the total number of the internals 5 is reduced, so the height of the argon column can be suppressed. On the other hand, reducing the number of the upper beds increases the packing length because it is necessary to pack extra beds in the upper part to compensate for the reduction in distillation performance. Therefore, in FIGS. 1 to 3, when the number of the upper beds is reduced from four to two ((A) to (C) in each figure), the relationship between the ratio of upper section length to total bed length and the ratio of additional bed length was verified.

Specifically, the distillation performance was calculated from the flow state of gas and liquid in the argon column (flow rate distribution of gas and liquid in the cross section of the column) shown in FIG. 1. For example, when the bed length is increased, the flow rate distribution takes into account the tendency of uneven flow, such as liquid gathering on the column wall, and the local gas-liquid ratio at that time was used to calculate the distillation performance. On the other hand, the impact of reducing the number of the beds was calculated assuming complete liquid mixing is carried out in the distributor. Here, the influence of the bed length on distillation performance was examined under three conditions using the above-mentioned model. The filling configuration under each condition is shown in Figures 1 to 3.

The vertical length of the upper bed 2u and the lower bed 2l is defined as $h_u$ and $h_l$. Further, the upper section length is defined as $H_u$ and the lower section length is defined as $H_l$.

FIG. 1 shows the argon column with three lower beds, FIG. 2 shows the argon column with two lower beds, and FIG. 3 shows the argon column with one lower bed. The lower bed length hl in these argon columns is all the same.

Furthermore, in each figure, there are three cases (A) to (C).

In the argon column shown in each figure (A) (Figure 1 (A): the number of the lower beds is three, and the number of the upper beds is four; Figure 2 (A): the number of the lower beds is two, and the number of the upper beds is four Figure 3 (A): the number of the lower beds is one, and the number of the upper beds is four), an upper section length $H_{UA}$ that satisfies the concentration specification (1 ppm oxygen) at the top of the column, and an upper section length $H_{UC}$ that satisfies the same concentration specification (1 ppm oxygen) at the top of the column when the number of the upper beds is changed from four beds (A) to two beds (C) in each figure were calculated. Note that the raw material composition supplied to the lower section was the same under all conditions.

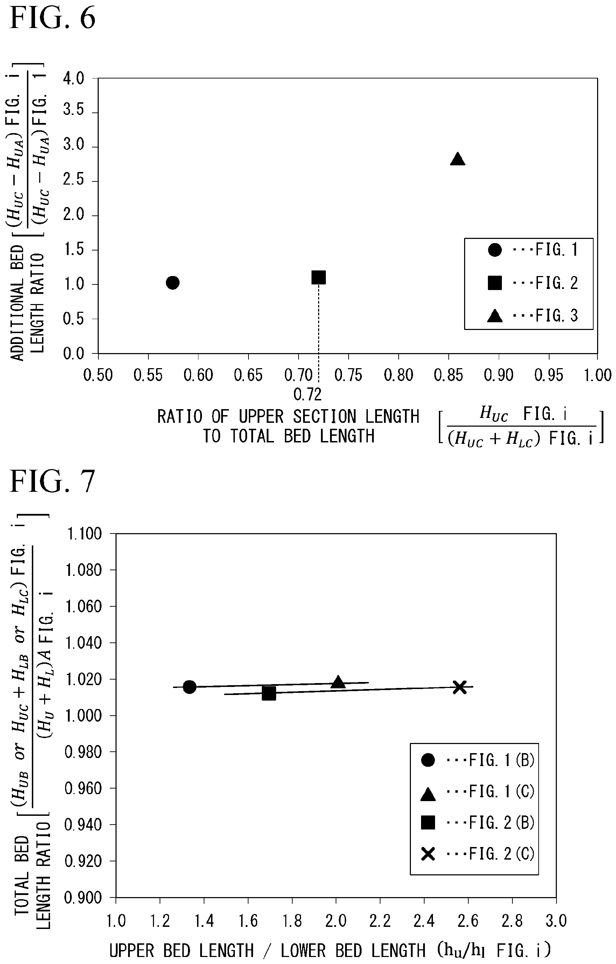

In Figure 6, the vertical axis represents a ratio when the numerator is the difference in section length between (A) and (C) in each figure, and the denominator is the difference in section length between (A) and (C) in Figure 1. The ratio is defined by the following equation (1).

$$(H_{UC} - H_{UA})_{\text{Figure } i} / (H_{UC} - M_{UA})_{\text{Figure } i} \qquad (1)$$

In the formula (1), i = 1 to 3, and subscripts A and C indicate (A) and (C) in FIGS. 1 to 3.

In Figure 6, the horizontal axis represents a ratio of the upper section length to the total bed length (total of the upper section length and the lower section length) in (C) of each figure, and is defined by the following equation (2).

$$H_{UC\;\text{Figure } i} / (H_{UC} + H_{LC})_{\text{Figure } i} \qquad (2)$$

In the formula (2), i = 1 to 3.

As shown in Fig. 6, when the upper section length ratio to the total bed length is increased, the additional bed length ratio increases (distillation performance decreases), so the upper section length becomes longer. Specifically, compared to a case of increasing the upper section length ratio to the total bed length by changing the state in Figure 1 to the state in Figure 2, the additional bed length ratio increases (distillation performance decreases), and the upper section length becomes longer in a case of increasing the upper session length ratio to the total bed length by changing the state in Figure 2 to the state in Figure 3 (the number of the lower beds is decreased from two to one and the number of the upper beds is increased from four to two). However, when the ratio of the upper section length to the total bed length is 72% or less, the upper section length does not become longer. In other words, it was found that when the ratio of the upper section length to the total bed length is 72% or less, the number of the beds can be reduced without reducing the distillation performance.

(Verification test 2)

It was found that in the region where argon is concentrated in the argon column of which the upper section length is 72% or less of the total bed length, there is also an optimum value for the ratio of the upper bed length $h_u$ to the lower bed length $h_l$.

In Figures 1 and 2, the relationship between the ratio of the total bed length and the ratio of the upper bed length $h_u$ to the lower bed length $h_l$ when the number of the upper beds is reduced from three to two ((B) to (C) in each figure) was verified.

Figure 7 shows the relationship between the total bed length of (B) and (C) where the number of the beds is reduced in Figures 1 and 2, where the upper section length is 72% or less of the total bed length, and the upper bed length relative to the lower bed length.

In FIG. 7, the horizontal axis indicates the upper bed length / lower bed length in (B) or (C) of each figure, and is defined by the following equation (3).

$$h_{uB \text{ or } uC \text{ of Figure } i} / h_{lB \text{ or } lC \text{ of Figure } i} \qquad (3)$$

The vertical axis indicates a ratio when the denominator is the total bed length in (A) and the numerator is the total bed length in (B) or (C) in each figure, and is defined by the following equation (4).

$$(H_{UB \text{ or } UC} + H_{LB \text{ or } LC})_{\text{Figure } i} / (H_U + H_L)A_{\text{Figure } i} \qquad (4)$$

In the formula (4), i = 1 or 2.

Even if the upper bed length is 1.25 times or more than the lower bed length as shown in FIG. 1(B) in FIG. 7, or even if the upper bed length is 2.5 times or more than the lower bed length as shown in FIG. 2 in FIG. 7, the total bed length ratio is close to 1. In other words, it was shown that even if the upper bed length was 1.25 times or more than the lower bed length, the number of the beds could be reduced without deteriorating the distillation performance.

EXPLANATION OF REFERENCE NUMERALS

2u, 2u (1A), 2u (1B), 2u (1C), 2u (2A), 2u (2B), 2u (2C), 2u (3A), 2u (3B), 2u (3C): upper bed
2l, 2l (1A), 2l (1B), 2l (1C), 2l (2A), 2l (2B), 2l (2C), 2l (3A), 2l (3B), 2l (3C): lower bed
3: liquid distributor
4: collector
5: internal
10, 11, 12, 21, 22, 23, 31, 32, 33, 111: argon column for an air separation unit (argon column)
20: high-pressure distillation column
30: low-pressure distillation column
40: high-purity argon distillation column
100: air separation unit
150: cold box (cold box)

**Claims**

1. An argon column for an air separation unit comprising a high-pressure column, a low-pressure column, and an argon column, that is a structured packed column using structured packing materials, and that produces an argon product using a fluid supplied from a middle portion of the low-pressure column as a raw material;

   wherein the argon column comprises an upper section and a lower section;
   wherein the upper section and the lower section both have a bed having the same bed length within the same section;
   wherein the upper section length is 72% or less of the total bed length; and
   wherein the upper bed length is 1.25 times or more than the lower bed length.

2. The argon column for an air separation unit according to Claim 1,

   wherein the number of the beds in the upper section is one or more; and
   wherein the number of the beds in the lower section is two or more.

3. The argon column for an air separation unit according to Claim 1 or 2,
   wherein an oxygen concentration in the argon product is 10 ppm or less.

4. The argon column for an air separation unit according to any one of Claims 1 to 3,
   wherein the argon column is vertically divided into two or more parts.

5. An air separation unit comprising the argon column for an air separation unit according to any one of Claims 1 to 4.

## FIG. 1

# FIG. 2

(A)　　　　　　(B)　　　　　　(C)

# FIG. 3

(A)  (B)  (C)

# FIG. 4

FIG. 5

## FIG. 6

## FIG. 7

## INTERNATIONAL SEARCH REPORT

| International application No. |
|---|
| **PCT/JP2022/033062** |

### A. CLASSIFICATION OF SUBJECT MATTER

*F25J 3/04*(2006.01)i; *F25J 3/02*(2006.01)i; *C01B 23/00*(2006.01)i; *B01D 3/16*(2006.01)i
FI:   F25J3/04 104; F25J3/02 A; C01B23/00 G; B01D3/16 A

According to International Patent Classification (IPC) or to both national classification and IPC

### B. FIELDS SEARCHED

Minimum documentation searched (classification system followed by classification symbols)

F25J3/02-3/04; C01B23/00; B01D3/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2010-210151 A (TAIYO NIPPON SANSO CORP.) 24 September 2010 (2010-09-24) | 1-5 |
| A | JP 7-155585 A (HITACHI, LTD.) 20 June 1995 (1995-06-20) | 1-5 |
| A | JP 2010-46616 A (TAIYO NIPPON SANSO CORP.) 04 March 2010 (2010-03-04) | 1-5 |
| A | JP 2000-249464 A (NIPPON SANSO CORP.) 14 September 2000 (2000-09-14) | 1-5 |
| A | JP 2020-26898 A (L'AIR LIQUIDE S. A. POUR L'ETUDE ET L'EXPLOITATION DES PROCEDES GEORGES CLAUDE) 20 February 2020 (2020-02-20) | 1-5 |
| A | JP 2004-251569 A (HITACHI, LTD.) 09 September 2004 (2004-09-09) | 1-5 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 October 2022** | **08 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| International application No. |
|---|
| **PCT/JP2022/033062** |

| Patent document cited in search report | | | Publication date (day/month/year) | Patent family member(s) | | | Publication date (day/month/year) |
|---|---|---|---|---|---|---|---|
| JP | 2010-210151 | A | 24 September 2010 | (Family: none) | | | |
| JP | 7-155585 | A | 20 June 1995 | (Family: none) | | | |
| JP | 2010-46616 | A | 04 March 2010 | (Family: none) | | | |
| JP | 2000-249464 | A | 14 September 2000 | US | 2002/0157537 | A1 | |
| | | | | EP | 1016457 | A2 | |
| | | | | CN | 1266170 | A | |
| JP | 2020-26898 | A | 20 February 2020 | CN | 110822812 | A | |
| | | | | KR | 10-2020-0018261 | A | |
| JP | 2004-251569 | A | 09 September 2004 | (Family: none) | | | |

Form PCT/ISA/210 (patent family annex) (January 2015)

**EP 4 397 928 A1**

REFERENCES CITED IN THE DESCRIPTION

**Patent documents cited in the description**

- JP 6257656 B
- JP 2000337766 A
- JP 2016059888 A
- JP 2011206681 A